# EUROPEAN PATENT SPECIFICATION

(11) **EP 3 180 574 B1**
(45) Date of publication and mention of the grant of the patent: **16.10.2019**
(21) Application number: 15754343.0
(22) Date of filing: 11.08.2015
(51) Int. Cl.: F25D 17/06, B60P 3/20, B60H 1/32, B60H 1/00, F25D 11/00

(54) **EVAPORATOR AIR DUCT STANDOFF**
VERDAMPFERLUFTKANALABSTANDSBOLZEN
ESPACEUR D'UN ÉVAPORATEUR À CONDUIT D'AIR

(30) Priority: 12.08.2014 US 201462036165 P
(43) Date of publication of application: 21.06.2017
(73) Proprietor: Carrier Corporation, Farmington, Connecticut 06032 (US)
(72) Inventor: CLIFFORD, Patrick D., East Syracuse, New York 13221 (US); RAU, Mark Patrick, East Syracuse, New York 13221 (US)
(74) Representative: Dehns
(86) International application number: PCT/US2015/044599
(87) International publication number: WO 2016/025445

(56) References cited:
- EP-A1- 1 154 210
- JP-A- H05 256 553
- JP-A- H08 337 287
- JP-A- 2001 091 127

## Description

### FIELD OF THE INVENTION

The subject matter disclosed herein relates to transport refrigeration systems and, more specifically, to standoffs for refrigeration system evaporator air ducts.

### BACKGROUND

Refrigerated vehicles have long been employed in a wide variety of applications including the storing and marketing of perishable commodities such as fruits or vegetables and processed, frozen, or chilled products such as ice cream. Refrigerated vehicles may include, for example, truck trailers for road transport, railroad cars, and container bodies for land and sea service. Refrigerated shipping containers include the shipping container itself and a refrigeration unit secured to one end of the container. Typically, the refrigeration unit is secured to the end of the container opposite the container doors.

Such refrigerated shipping containers are configured to be easily transported on ships, for example, by stacking a number of such containers on top of one another and by placing a number of such stacks of containers in rows and columns next to one another on the ship. After transport by ship, these same containers can be moved by crane and mounted onto a rail car for transport via rail and/or onto a tractor-trailer for transport via road.

Some known shipping containers include an evaporator air duct that includes bent aluminum channels that extend along the evaporator air duct. However, these aluminum channels may cause poor airflow through the evaporator air duct, causing pressure loss and unequal temperature distribution. Accordingly, it is desirable to provide evaporator air duct standoffs to aid in airflow, temperature distribution, and pressure loss reduction.

JP 2001 091127 discloses a refrigerator with a duct behind the storage compartment. The duct includes a plurality of ribs for directing the cooled air within the duct.

### BRIEF DESCRIPTION OF THE INVENTION

According to the invention, there is provided an evaporator air duct panel for a refrigeration system having an evaporator and an evaporator air duct at least partially defined by the evaporator air duct panel, the evaporator air duct panel comprising: a plurality of standoffs extending from the evaporator air duct panel, the plurality of standoffs configured to extend into the evaporator air duct; and a component housing portion extending from the evaporator air duct panel into the evaporator air duct and forming a low-flow area below the component housing portion; characterised in that the plurality of standoffs are arranged in a pattern that includes a first group, a second group, a third group and a fourth group arranged linearly along an air flow direction; and in that the first group, and the fourth group comprise standoffs angled relative to the air flow direction for directing air to the low-flow area.

According to a preferred embodiment, there is provided a refrigeration system comprising: an evaporator; an evaporator air duct panel disposed downstream of the evaporator; an evaporator air duct at least partially defined by the air duct panel and configured to receive an airflow from the evaporator; a plurality of standoffs extending from the evaporator air duct panel into the evaporator air duct; and a component housing portion extending from the evaporator air duct panel into the evaporator air duct and forming a flow-flow area below the component housing portion; characterised in that the plurality of standoffs are arranged in a pattern that includes a first group, a second group, a third group and a fourth group arranged linearly along an air flow direction; and in that the first group and the fourth group comprise standoffs angled relative to the air flow direction for directing air to the low-flow area.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of an exemplary refrigeration system;
FIG. 2 is a schematic illustration of an exemplary refrigerated container;
FIG. 3 is a front view of an exemplary refrigeration system that may be used in the refrigerated container shown in FIG. 2;
FIG. 4 is a perspective view of another exemplary refrigeration system that may be used in the refrigerated container shown in FIG. 2; and
FIG. 5 is a perspective view of an exemplary standoff that may be used with the refrigeration systems shown in FIGS. 3 and 4.

### DETAILED DESCRIPTION OF THE INVENTION

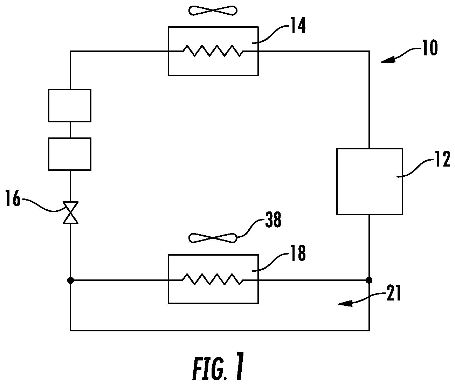

FIG. 1 illustrates a simplified schematic diagram of an exemplary container refrigeration system 10 that generally includes a compressor 12, a condenser 14, an expansion valve 16, and an evaporator 18.

Operation of refrigeration system 10 may begin at compressor 12 where suction gas (refrigerant) is compressed to a higher temperature and pressure. The refrigerant gas is supplied to condenser 14 and air flowing across a group of finned tubes (not shown) cools and condenses the gas. By removing latent heat, the gas condenses to a high pressure,
high temperature liquid and flows to expansion valve 16. The liquid refrigerant passing through expansion valve 16 is expanded or reduced in pressure and may be flashed or vaporized into a gas. The expanded refrigerant is subsequently supplied to evaporator 18 where it is further vaporized against return air. The cargo container air to be cooled is passed across tubes/fins of evaporator 18, and heat is removed from the air as it is absorbed by the refrigerant in evaporator 18. This causes the temperature of the low pressure refrigerant vapor to increase before it is returned to compressor 12 to complete the refrigeration cycle.

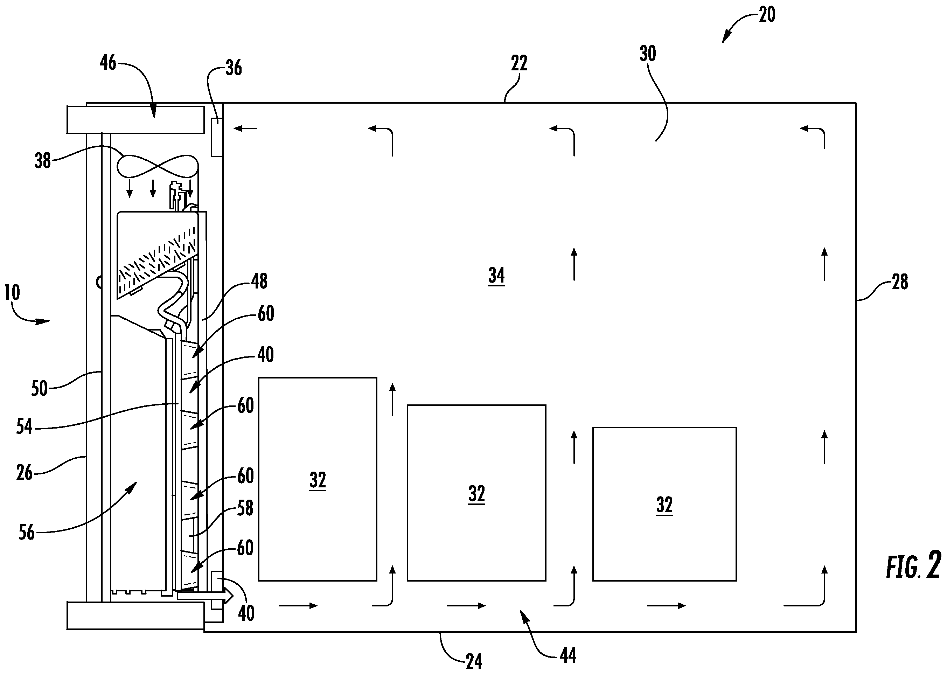

FIG. 2 illustrates an exemplary cargo container unit 20 that generally includes a top wall 22, a bottom wall or floor 24, end walls 26, 28, and side walls 30. Container unit 20 is designed to contain cargo 32 within a climate controlled environment 34 to facilitate maintaining cargo 32 in a fresh and refrigerated condition. For that purpose, refrigeration system 10 is operatively connected to end 26 of container unit 20.

As indicated by the arrows, the air in climate controlled environment 34 passes into an inlet 36 of refrigeration system 10 and is directed, by way of a fan 38, through evaporator 18 where it is cooled. The cooled air subsequently passes through an evaporator air duct 40, through an outlet 42 into a lower portion 44 of unit 20, and upwardly through cargo 32 to inlet 36 to complete the cycle.

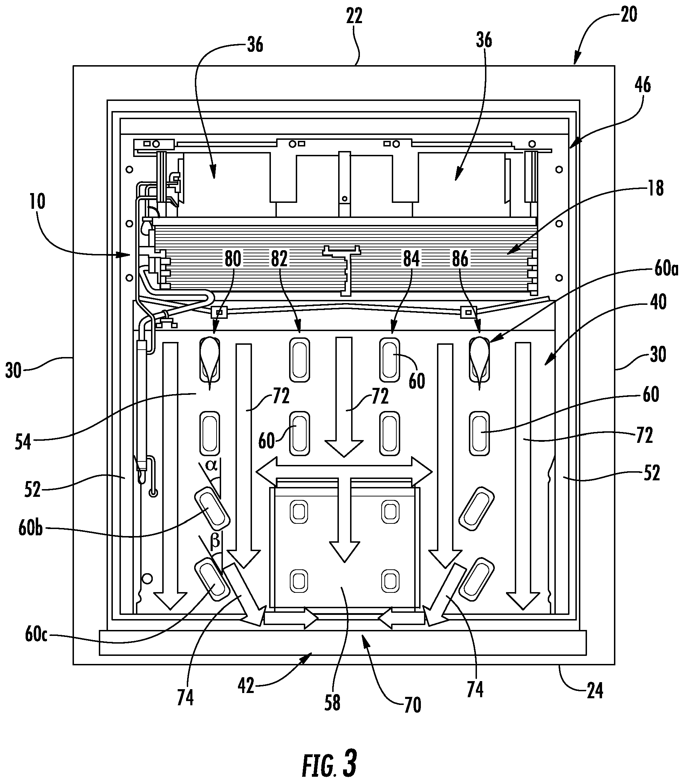

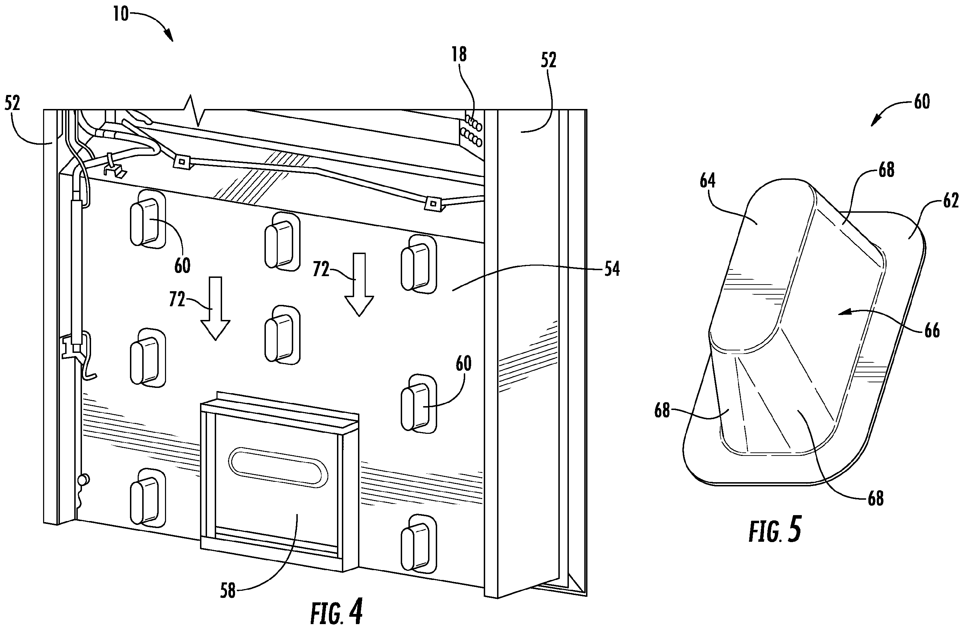

With reference to FIGS. 2-4, refrigeration system 10 further includes a housing 46 having a front panel 48 (FIG. 2), a back panel 50, side panels 52, an air duct panel 54, and a component housing 56. FIGS. 3 and 4 illustrate refrigeration system 10 with front panel 48 removed. Evaporator air duct 40 is generally defined by front panel 48, side panels 52, air duct panel 54, and a portion 58 of component housing 56. Air duct panel 54 and housing portion 58 separate air duct 40 from component housing 56, which houses system components such as compressor 12.

In the embodiment according to the invention, air duct panel 54 includes a plurality of standoffs 60 coupled thereto. In preferred embodiment, standoffs 60 are molded standoffs subsequently attached to panel 54 such as, for example, by welding or adhesives. However, standoffs 60 may be coupled by any suitable attachment method. Alternatively, standoffs 60 may be formed integrally with air duct panel 54. Moreover, in one embodiment, standoffs 60 are fabricated from a polymer material or a plastic material. However, standoffs 60 may be fabricated from any suitable material that enables standoffs 60 to function as described herein. Standoffs 60 extend into air duct 40 and may be arranged in various patterns to facilitate airflow through air duct 40, temperature distribution through air duct 40 (and thus climate controlled environment 34), and pressure loss reduction within air duct 40. In addition, standoffs 60 provide refrigeration system end load protection (e.g., from shifting cargo), rack resistance, and prevention of air pressure bulging the back panel due to air pressure.

With reference to FIG. 5, standoffs 60 each include a base 62, a distal surface 64, and a side walls 66 extending therebetween. Base 62 is coupled to air duct panel 54 and distal surface 64 is configured to abut against front panel 48 to provide structural integrity to refrigeration system 10. Sidewalls 66 are generally tapered inward toward each other from base 62 to distal surface 64 and include rounded portions 68, which facilitate smooth airflow around standoffs 60. In a preferred embodiment, standoffs 60 are generally oval shaped to facilitate flow around standoffs 60 and to decrease backpressure of the air flowing through air duct 40. However, standoffs may have any suitable shape that enables refrigeration system 10 to function as described herein. For example, as shown in FIG. 3, standoffs 60a may have an airfoil shape.

In the embodiment according to the invention, component housing portion 58 extends into air duct 40, which may block airflow between inlet 36 and outlet 42. This may cause reduced airflow in an area 70 below component housing portion 58. However, as illustrated in FIG. 3, standoffs 60 are angled relative to an airflow direction 72 through air duct 40 to direct airflow to area 70. For example, standoffs 60b are oriented toward component housing portion 58 at an angle 'α' relative to airflow direction 72, which directs airflow toward and beneath housing portion 58, as shown by arrows 74. Similarly, standoffs 60c are oriented toward component housing portion 58 at an angle 'β' relative to airflow direction 72 to direct airflow toward and beneath housing portion 58.

In a preferred embodiment, angle 'α' is 30° or approximately 30°, and angle 'β' is 45° or approximately 45°. However, angles 'α' and 'β' may be any suitable angle that enables system 10 to function as described herein. For example, angles 'α' and 'β' may be between 0° and 60° or between approximately 0° and approximately 60°. Further, angles 'α' and 'β' may be the same angle or different angles. It should be understood that standoffs 60 are oriented at angles 'α' and 'β' to provide a desired air flow through air duct 40, and as such, may be varied depending on variations in or requirements of system 10 and/or container 20.

As illustrated in FIGS. 3 and 4, standoffs 60 are arranged in different patterns to produce a desired airflow within air duct 40 and/or container 20. For example, as shown in FIG. 3, standoffs 60 are arranged in a pattern that includes a first group 80, a second group 82, a third group 84, and a fourth group 86. Each group includes standoffs 60 arranged linearly or generally linearly along air flow direction 72. This directs airflow along direction 72 between adjacent groups 80, 82, 84, 86 and side panels 52. The shape of standoffs 60 allows the air to flow smoothly around standoff walls 66, which facilitates preventing pressure loss as the air flows through air duct 40. First group 80 and fourth group 86 include angled standoffs 60b and 60c, which direct air to low-flow area 70 caused by housing portion 58. As such, standoffs 60 maintain a free space within air duct 40 for air to flow to cargo 32, while balancing temperature distribution and reducing pressure loss throughout air duct 40.

In operation of refrigeration system 10, air flows through inlets 36 and is subsequently cooled by contact with evaporator 18 (see FIG. 3). The cooled air enters evaporator air duct 40 and flows along direction 72 around and between standoffs 60. Some airflow is directed around compartment housing portion 58, which extends into air duct 40. However, angled standoffs 60b, 60c redirect the air along direction 74 to area 70 to increase airflow and temperature distribution therein.

A method of assembling refrigeration system 10 includes providing refrigeration system 10 and providing one or more standoffs 60. The one or more standoffs 60 are coupled to air duct panel 54 such that the one or more standoffs 60 extend into air duct 40. Alternatively or additionally, the one or more standoffs 60 could be coupled to front panel 48. The one or more standoffs 60 are oriented within air duct 40 to facilitate air flow between inlet 36 and outlet 42. One of the one or more standoffs 60 may be oriented at an angle 'α', 'β' relative airflow direction 72 to facilitate directing airflow to a desired portion or area of refrigeration system 10.

The systems and method described herein provide a refrigeration system for a temperature controlled transport container. One or more standoffs are arranged in an evaporator air duct to improve airflow therethrough. For example, the shape of the standoffs may enable air to flow smoothly around the standoffs with little or no obstruction, as well as throughout the air duct. The standoffs are angled relative to the airflow direction to direct the airflow in desired directions or patterns to balance the temperature distribution provided by the refrigeration system and to balance airflow distribution across the bottom of the container. The standoffs additionally provide end load protection, rack resistance, and prevent panel bulging.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An evaporator air duct panel (54) for a refrigeration system (10) having an evaporator (18) and an evaporator air duct (40) at least partially defined by the evaporator air duct panel, the evaporator air duct panel comprising:
a plurality of standoffs (60) extending from the evaporator air duct panel, the plurality of standoffs configured to extend into the evaporator air duct; and
a component housing portion (58) extending from the evaporator air duct panel into the evaporator air duct and forming a low-flow area (70) below the component housing portion;
**characterised in that** the plurality of standoffs are arranged in a pattern that includes a first group (80), a second group (82), a third group (84) and a fourth group (86), with each group standoffs (80, 82, 84, 86) arranged linearly along an air flow direction (72); and
**in that** the first group, and the fourth group comprise standoffs angled relative to the air flow direction for directing air to the low-flow area.

2. The evaporator air duct panel (54) of claim 1, wherein at least one standoff (60) of the plurality of standoffs is oval shaped.

3. The evaporator air duct panel (54) of claim 1, wherein at least one standoff (60) of the plurality of standoffs is airfoil shaped.

4. The evaporator air duct panel (54) of claim 1, wherein the first and fourth groups (80,86) comprise standoffs (60) angled between 0° and 45° relative to the airflow direction (72).

5. The evaporator air duct panel (54) of claim 1, wherein each standoff (60) of the plurality of standoffs comprises a base surface (62) and a distal surface (64) connected by sidewalls (66).

6. The evaporator air duct panel (54) of claim 5, wherein the sidewalls (66) include rounded portions (68) configured to direct airflow around the standoff (60).

7. A refrigeration system (10) comprising:
an evaporator (18);
an evaporator air duct panel (54) as claimed in claim 1 disposed downstream of the evaporator; and
an evaporator air duct (40) at least partially defined by the air duct panel and configured to receive an airflow from the evaporator.

8. The system of claim 7, wherein at least one standoff (60) of the plurality of standoffs is oval shaped.

9. The system of claim 7, wherein at least one standoff (60) of the plurality of standoffs is airfoil shaped.

10. The system of claim 7, wherein the first and fourth groups (80,86) comprise standoffs (60) angled between 0° and 45°relative to the airflow direction (72).

11. The system of claim 7, wherein each standoff (60) of the plurality of standoffs comprises a base surface (62) and a distal surface (64) connected by sidewalls (66).

12. The system of claim 11, wherein the sidewalls (66) include rounded portions (68) configured to direct airflow around the standoff (60).

13. The system of claim 11, further comprising a cargo container (20) configured to hold cargo (32), the refrigeration system (10) coupled to the cargo container to provide a temperature controlled environment (34) within the cargo container.

14. The system of claim 13, further comprising an air inlet (36) located at a top of the refrigeration system (10) to receive air from an upper portion of the temperature controlled environment (34) and an air outlet (42) located at a bottom of the refrigeration system to supply air from the evaporator air duct (40) to a lower portion (44) of the temperature controlled environment, wherein the cargo container (20) is a marine cargo container.

## Patentansprüche

1. Verdampferluftkanalplatte (54) für ein Kühlsystem (10), das einen Verdampfer (18) und einen Verdampferluftkanal (40) aufweist, der zumindest teilweise durch die Verdampferluftkanalplatte definiert wird, wobei die Verdampferluftkanalplatte Folgendes umfasst:
eine Vielzahl von Abstandsbolzen (60), die sich von der Verdampferluftkanalplatte erstrecken, wobei die Vielzahl von Abstandsbolzen konfiguriert ist, um sich in den Verdampferluftkanal zu erstrecken; und
einen Bauteilgehäuseabschnitt (58), der sich von der Verdampferluftkanalplatte in den Verdampferluftkanal erstreckt und einen Bereich mit geringer Strömung (70) unter dem Bauteilgehäuseabschnitt bildet;
**dadurch gekennzeichnet, dass** die Vielzahl von Abstandsbolzen in einem Muster angeordnet ist, das eine erste Gruppe (80), eine zweite Gruppe (82), eine dritte Gruppe (84) und eine vierte Gruppe (86) beinhaltet, wobei die Abstandsbolzen (80, 82, 84, 86) jeder Gruppe linear entlang einer Luftströmungsrichtung (72) angeordnet sind; und
dadurch, dass die erste Gruppe und die vierte Gruppe Abstandsbolzen umfassen, die in Bezug auf die Luftströmungsrichtung abgewinkelt sind, um Luft zum Bereich mit geringer Strömung zu leiten.

2. Verdampferluftkanalplatte (54) nach Anspruch 1, wobei mindestens ein Abstandsbolzen (60) aus der Vielzahl von Abstandsbolzen oval ist.

3. Verdampferluftkanalplatte (54) nach Anspruch 1, wobei mindestens ein Abstandsbolzen (60) aus der Vielzahl von Abstandsbolzen schaufelprofilförmig ist.

4. Verdampferluftkanalplatte (54) nach Anspruch 1, wobei die erste und die vierte Gruppe (80, 86) Abstandsbolzen (60) umfassen, die einen Winkel zwischen 0° und 45° in Bezug auf die Luftströmungsrichtung (72) aufweisen.

5. Verdampferluftkanalplatte (54) nach Anspruch 1, wobei jeder Abstandsbolzen (60) aus der Vielzahl von Abstandsbolzen eine Grundfläche (62) und eine distale Fläche (64) umfasst, die durch Seitenwände (66) verbunden sind.

6. Verdampferluftkanalplatte (54) nach Anspruch 5, wobei die Seitenwände (66) abgerundete Abschnitte (68) beinhalten, die konfiguriert sind, um einen Luftstrom um die Abstandsbolzen (60) zu leiten.

7. Kühlsystem (10), umfassend:
einen Verdampfer (18);
eine Verdampferluftkanalplatte (54) nach Anspruch 1, die stromabwärts des Verdampfers angeordnet ist; und
einen Verdampferluftkanal (40), der zumindest teilweise durch die Luftkanalplatte definiert wird und konfiguriert ist, um einen Luftstrom vom Verdampfer zu empfangen.

8. System nach Anspruch 7, wobei mindestens ein Abstandsbolzen (60) aus der Vielzahl von Abstandsbolzen oval ist.

9. System nach Anspruch 7, wobei mindestens ein Abstandsbolzen (60) aus der Vielzahl von Abstandsbolzen schaufelprofilförmig ist.

10. System nach Anspruch 7, wobei die erste und die vierte Gruppe (80, 86) Abstandsbolzen (60) umfassen, die einen Winkel zwischen 0° und 45° in Bezug auf die Luftströmungsrichtung (72) aufweisen.

11. System nach Anspruch 7, wobei jeder Abstandsbolzen (60) aus der Vielzahl von Abstandsbolzen eine Grundfläche (62) und eine distale Fläche (64) umfasst, die durch Seitenwände (66) verbunden sind.

12. System nach Anspruch 11, wobei die Seitenwände (66) abgerundete Abschnitte (68) beinhalten, die konfiguriert sind, um einen Luftstrom um die Abstandsbolzen (60) zu leiten.

13. System nach Anspruch 11, ferner umfassend einen Frachtbehälter (20), der konfiguriert ist, um Fracht (32) aufzunehmen, wobei das Kühlsystem (10) mit dem Frachtbehälter gekoppelt ist, um eine temperaturgeregelte Umgebung (34) innerhalb des Frachtbehälters bereitzustellen.

14. System nach Anspruch 13, ferner umfassend einen Lufteinlass (36), der an einer Oberseite des Kühlsystems (10) angeordnet ist, um Luft von einem oberen Abschnitt der temperaturgeregelten Umgebung (34) aufzunehmen, und einen Luftauslass (42), der an einer Unterseite des Kühlsystems angeordnet ist, um Luft vom Verdampferluftkanal (40) zu einem unteren Abschnitt (44) der temperaturgeregelten Umgebung zu liefern, wobei der Frachtbehälter (20) ein Schiffsfrachtbehälter ist.

## Revendications

1. Panneau d'un évaporateur à conduit d'air (54) pour un système de réfrigération (10) comportant un évaporateur (18) et un évaporateur à conduit d'air (40) au moins partiellement défini par le panneau d'évaporateur à conduit d'air, le panneau d'évaporateur à conduit d'air comprenant :
une pluralité d'espaceurs (60) s'étendant depuis le panneau d'évaporateur à conduit d'air, la pluralité d'espaceurs étant configurée pour s'étendre dans l'évaporateur à conduit d'air ; et
une partie de logement de composant (58) s'étendant depuis le panneau d'évaporateur à conduit d'air dans l'évaporateur à conduit d'air et formant une zone à faible débit (70) sous la partie de logement de composant ;
**caractérisé en ce que** la pluralité d'espaceurs est agencée selon un motif qui comprend un premier groupe (80), un deuxième groupe (82), un troisième groupe (84) et un quatrième groupe (86), les espaceurs de chaque groupe (80, 82, 84, 86) étant disposés linéairement le long d'une direction d'écoulement d'air (72) ; et
**en ce que** le premier groupe et le quatrième groupe comprennent des espaceurs inclinés par rapport à la direction d'écoulement d'air pour diriger l'air vers la zone à faible débit.

2. Panneau d'évaporateur à conduit d'air (54) selon la revendication 1, dans lequel au moins un espaceur (60) de la pluralité d'espaceurs est de forme ovale.

3. Panneau d'évaporateur à conduit d'air (54) selon la revendication 1, dans lequel au moins un espaceur (60) de la pluralité d'espaceurs est en forme de surface portante.

4. Panneau d'évaporateur à conduit d'air (54) selon la revendication 1, dans lequel les premier et quatrième groupes (80, 86) comprennent des espaceurs (60) inclinés entre 0° et 45° par rapport à la direction de l'écoulement d'air (72).

5. Panneau d'évaporateur à conduit d'air (54) selon la revendication 1, dans lequel chaque espaceur (60) de la pluralité d'espaceurs comprend une surface de base (62) et une surface distale (64) reliées par des parois latérales (66).

6. Panneau d'évaporateur à conduit d'air (54) selon la revendication 5, dans lequel les parois latérales (66) comprennent des parties arrondies (68) configurées pour diriger un écoulement d'air autour de l'espaceur (60).

7. Système de réfrigération (10) comprenant :
un évaporateur (18) ;
un panneau d'évaporateur à conduit d'air (54) selon la revendication 1, disposé en aval de l'évaporateur ; et
un conduit d'air d'évaporateur (40) au moins partiellement défini par le panneau de conduit d'air et configuré pour recevoir un écoulement d'air de l'évaporateur.

8. Système selon la revendication 7, dans lequel au moins un espaceur (60) de la pluralité d'espaceurs est de forme ovale.

9. Système selon la revendication 7, dans lequel au moins un espaceur (60) de la pluralité d'espaceurs est en forme de surface portante.

10. Système selon la revendication 7, dans lequel les premier et quatrième groupes (80, 86) comprennent des espaceurs (60) inclinées entre 0° et 45° par rapport à la direction d'écoulement d'air (72).

11. Système selon la revendication 7, dans lequel chaque espaceur (60) de la pluralité d'espaceurs comprend une surface de base (62) et une surface distale (64) reliées par des parois latérales (66).

12. Système selon la revendication 11, dans lequel les parois latérales (66) comprennent des parties arrondies (68) configurées pour diriger l'écoulement d'air autour de l'espaceur (60).

13. Système selon la revendication 11, comprenant en outre un conteneur de fret (20) conçu pour contenir un élément de fret (32), le système de réfrigération (10) étant couplé au conteneur de fret pour fournir un environnement à température contrôlée (34) à l'intérieur du conteneur de fret.

14. Système selon la revendication 13, comprenant en outre une entrée d'air (36) située au sommet du système de réfrigération (10) pour recevoir de l'air provenant d'une partie supérieure de l'environnement à température contrôlée (34) et une sortie d'air (42) située au bas du système de réfrigération pour fournir de l'air depuis l'évaporateur à conduit d'air (40) à une partie inférieure (44) de l'environnement à température contrôlée, dans lequel le conteneur de fret (20) est un conteneur de fret maritime.
